# EUROPEAN PATENT SPECIFICATION

(11) **EP 4 274 203 B1**
(45) Date of publication and mention of the grant of the patent: **23.04.2025**
(21) Application number: 21921823.7
(22) Date of filing: 28.01.2021
(51) Int. Cl.: H04M 1/725, H01Q 1/22, H01Q 1/24

(54) **ANTENNA BLOCKING ALERT METHOD, COMMUNICATION CHIP, AND DEVICE**
ANTENNENBLOCKIERUNGSWARNVERFAHREN, KOMMUNIKATIONSCHIP UND VORRICHTUNG
PROCÉDÉ D'ALERTE DE BLOCAGE D'ANTENNE, PUCE DE COMMUNICATION ET DISPOSITIF

(43) Date of publication of application: 08.11.2023
(73) Proprietor: Huawei Technologies Co., Ltd., Shenzhen, Guangdong 518129 (CN)
(72) Inventor: ZHOU, Kai, Shenzhen, Guangdong 518129 (CN); WANG, Qinghui, Shenzhen, Guangdong 518129 (CN); GU, Yanjie, Shenzhen, Guangdong 518129 (CN)
(74) Representative: Pfenning, Meinig & Partner mbB
(86) International application number: PCT/CN2021/074255
(87) International publication number: WO 2022/160215

(56) References cited:
- WO-A1-2015/126444
- CN-A- 105 959 464
- CN-A- 106 911 848
- CN-A- 108 989 567
- CN-A- 109 391 307
- CN-A- 111 669 207
- US-A1- 2019 089 471
- US-A1- 2020 205 073

## Description

### TECHNICAL FIELD

This application relates to the chip field, and in particular, to an antenna blocking alarm method, a communication chip and device, a computer-readable storage medium, and a computer program product.

### BACKGROUND

Document US 2019/089471 A1 describes techniques and technologies for providing self-testing capabilities in antenna arrays.

Document WO 2015/126444 A1 describes a method for transport link quality measurement in a distributed antenna system.

Document CN 109 391 307 A describes an antenna beam detecting system and method and a mobile terminal.

Document CN 106 911 848 A describes a method for outputting a prompt message.

When using mobile phones, due to preferences and habits of some users, the users may cover the mobile phones with protective cases made of different materials. As a result, an antenna of the mobile phone is blocked by the protective case, and a signal is weak or even no signal is received. Alternatively, the user may hold the mobile phone with both hands to perform a landscape operation. As a result, the antenna of the mobile phone is blocked by the hands of the user, and the signal is weak or even no signal is received.

Signal strength of the mobile phone is an important factor that affects user experience. For example, when the signal of the mobile phone is usually weak or even no signal is received, the user cannot determine a reason for signal quality deterioration. Therefore, when the signal of the mobile phone is weak due to the foregoing user-related factors, the mobile phone needs to prompt the user, to improve user experience.

### SUMMARY

Embodiments of this invention provide an antenna blocking alarm method, a communication chip and device, a computer-readable storage medium, and a computer program product according to the independent claims, to resolve a problem that a communication device cannot prompt a user when the user uses the communication device and an antenna of the communication device is blocked.

To achieve the foregoing objective, the following technical solutions are used in embodiments of this application.

According to a first aspect, an embodiment of this invention provides an antenna blocking alarm method. The method may be applied to a communication chip of a communication device. The method may include: The communication chip obtains an attenuation value of an air interface loopback signal through an antenna; the communication chip determines, based on the attenuation value, whether the antenna is blocked; and when determining that the antenna is blocked, the communication chip indicates a processor to output, to a user, alarm information prompting that the antenna is blocked.

By using the foregoing technical solution, whether the antenna of the communication device is blocked may be determined based on the attenuation value of the signal. When it is determined that the antenna is blocked, the alarm information is output to prompt the user that the antenna is blocked. In this way, the user can find, based on the alarm information, that the antenna of the communication device is blocked, and then remove an obstacle (such as a protective case and hands) in a timely manner, to improve user experience.

Further, the antenna includes a first antenna and a second antenna. That the communication chip obtains an attenuation value of an air interface loopback signal through an antenna includes: The communication chip transmits a measurement signal through the first antenna, and receives the measurement signal looped back to the second antenna; and the communication chip determines the attenuation value based on a strength value of the measurement signal and a strength value of the looped back measured signal. In this way, the communication chip measures, through air interface loopback measurement, the attenuation value when the measurement signal is received. This facilitates measurement and can avoid interference caused by an external environment, such as a building, to measure the attenuation value.

Additionally, the communication chip includes a Bluetooth module and a wireless fidelity Wi-Fi network module. That the communication chip transmits a measurement signal through the first antenna, and receives the measurement signal looped back to the second antenna includes: When a Wi-Fi service of the communication chip is idle, the Bluetooth module generates a monophonic signal or a modulation signal of specific strength as the measurement signal; the Bluetooth module transmits the measurement signal through the first antenna; the Wi-Fi network module receives the measurement signal looped back to the second antenna; and the Wi-Fi network module determines the attenuation value based on the strength value of the measurement signal and the strength value of the looped back measurement signal.

In another possible implementation, that the communication chip obtains an attenuation value of an air interface loopback signal through an antenna includes: The communication chip periodically obtains a plurality of attenuation values based on a preset periodicity. That the communication chip determines, based on the attenuation value, whether the antenna is blocked includes: The communication chip determines, based on the plurality of obtained attenuation values, whether the antenna is blocked. In this way, whether the antenna is blocked can be more accurately determined based on the plurality of obtained attenuation values, and this reduces misjudgment.

In another possible implementation, that the communication chip determines, based on the attenuation value, whether the antenna is blocked includes: The communication chip determines whether a difference between the attenuation value within first preset duration and an attenuation calibration value is greater than a first preset threshold; if the difference between the attenuation value within the first preset duration and the attenuation calibration value is greater than the first preset threshold, the communication chip determines that the antenna is blocked; and if the difference between the attenuation value within the first preset duration and the attenuation calibration value is not greater than the first preset threshold, the communication chip determines that the antenna is not blocked.

In another possible implementation, that the communication chip determines, based on the attenuation value, whether the antenna is blocked includes: When a difference between the attenuation value obtained before second preset duration and an attenuation calibration value is less than a second preset threshold, the communication chip determines whether differences between a plurality of attenuation values consecutively obtained within the second preset duration and the attenuation calibration value are all greater than the second preset threshold; if the differences between the plurality of attenuation values consecutively obtained within the second preset duration and the attenuation calibration value are all greater than the second preset threshold, the communication chip determines that the antenna is blocked; and if the differences between the plurality of attenuation values consecutively obtained within the second preset duration and the attenuation calibration value are not all greater than the second preset threshold, the communication chip determines that the antenna is not blocked.

In another possible implementation, that the communication chip determines that the antenna is blocked includes: The communication chip determines, based on status indication information, that the antenna is blocked due to an abnormal holding posture, where the status indication information indicates that the communication device is in a landscape mode.

According to a second aspect, an example provides a communication chip. The communication chip is used in a communication device and the communication device is configured to carry out the method in the first aspect or the possible designs of the first aspect. The communication chip implements functions performed by the communication chip in the first aspect or the possible designs of the first aspect, and the functions may be implemented by hardware. The hardware includes one or more modules corresponding to the foregoing functions. For example, the communication chip may include a control module, a transceiver module, and the like. The transceiver module may further include a baseband module, a radio frequency module, and the like.

The control module is configured to obtain an attenuation value of an air interface loopback signal through an antenna; determine, based on the attenuation value, whether the antenna is blocked; and when determining that the antenna is blocked, indicate a processor to output, to a user, alarm information prompting that the antenna is blocked.

The antenna includes a first antenna and a second antenna, and the communication chip further includes the transceiver module. The transceiver module is configured to transmit, based on control of the control module, a measurement signal through the first antenna, receive the measurement signal looped back to the second antenna, and measure a strength value of the looped back measurement signal. The control module is specifically configured to determine the attenuation value based on a strength value of the measurement signal and the strength value of the looped back measurement signal.

The transceiver module includes the baseband module and the radio frequency module. The baseband module is configured to generate the measurement signal based on the control of the control module. The radio frequency module is configured to transmit the measurement signal through the first antenna, and receive the measurement signal looped back to the second antenna. The baseband module is further configured to measure the strength value of the looped back measurement signal.

The control module includes a first control module and a second control module, the baseband module includes a Bluetooth baseband module and a wireless fidelity Wi-Fi baseband module, and the radio frequency module includes a Bluetooth radio frequency module and a Wi-Fi radio frequency module. When a Wi-Fi service of the communication chip is idle, the first control module is configured to control the Bluetooth baseband module to generate a monophonic signal or a modulation signal of specific strength as the measurement signal. The Bluetooth baseband module is configured to generate the measurement signal based on control of the first control module. The Bluetooth radio frequency module is configured to transmit the measurement signal through the first antenna. The Wi-Fi radio frequency module is configured to receive the measurement signal looped back to the second antenna. The Wi-Fi baseband module is configured to measure the strength value of the looped back measurement signal. The second control module is configured to determine the attenuation value based on the strength value of the measurement signal and the strength value of the looped back measurement signal.

In another possible implementation, the control module is specifically configured to periodically obtain a plurality of attenuation values based on a preset periodicity, and determine, based on the plurality of obtained attenuation values, whether the antenna is blocked.

In another possible implementation, the control module is specifically configured to: determine whether a difference between the attenuation value within first preset duration and an attenuation calibration value is greater than a first preset threshold; if the difference between the attenuation value within the first preset duration and the attenuation calibration value is greater than the first preset threshold, determine that the antenna is blocked; and if the difference between the attenuation value within the first preset duration and the attenuation calibration value is not greater than the first preset threshold, determine that the antenna is not blocked.

In another possible implementation, the control module is specifically configured to: when a difference between the attenuation value obtained before second preset duration and an attenuation calibration value is less than a second preset threshold, determine whether differences between a plurality of attenuation values consecutively obtained within the second preset duration and the attenuation calibration value are all greater than the second preset threshold; if the differences between the plurality of attenuation values consecutively obtained within the second preset duration and the attenuation calibration value are all greater than the second preset threshold, determine that the antenna is blocked; and if the differences between the plurality of attenuation values consecutively obtained within the second preset duration and the attenuation calibration value are not all greater than the second preset threshold, determine that the antenna is not blocked.

In another possible implementation, the control module is specifically configured to determine, based on status indication information, that the antenna is blocked due to an abnormal holding posture, where the status indication information indicates that the communication device is in a landscape mode.

According to a third aspect, an example provides a communication chip. The communication chip is used in a communication device, and the communication device is configured to perform the antenna blocking alarm method according to any one of the first aspect or the possible designs of the first aspect.

According to a fourth aspect, an embodiment of this application provides a chipset. The chipset is used in a communication device and the communication device is configured to perform the antenna blocking alarm method according to any one of the first aspect or the possible designs of the first aspect. The chipset includes a processor and the communication chip according to the third aspect. The communication chip is configured to perform the antenna blocking alarm method according to any one of the first aspect or the possible designs of the first aspect. The processor is configured to control, based on an indication of the communication chip, the communication device to output, to a user, alarm information prompting that the antenna is blocked.

According to a fifth aspect, an embodiment of this application provides a communication device. The communication device includes an antenna and the chipset according to the fourth aspect. When the communication device runs, the chipset performs the antenna blocking alarm method according to any one of the first aspect or the possible designs of the first aspect.

It should be understood that, for beneficial effects of the second aspect to the fifth aspect, refer to related descriptions in the first aspect. Details are not described herein again.

According to a sixth aspect, an embodiment of this application provides another antenna blocking alarm method. The method is applied to a communication device having an antenna and comprises the steps of the antenna blocking alarm method according to any one of the first aspect or the possible designs of the first aspect.

By using the foregoing technical solution, whether the antenna of the communication device is blocked is determined based on the attenuation value of the signal. When it is determined that the antenna is blocked, the alarm information is output to prompt the user that the antenna is blocked. In this way, the user can find, based on the alarm information, that the antenna of the communication device is blocked, and then remove an obstacle (such as a protective case and hands) in a timely manner, to improve user experience.

The antenna includes a first antenna and a second antenna. That the communication device obtains an attenuation value of an air interface loopback signal through an antenna includes: The communication device transmits a measurement signal through the first antenna, and receives the measurement signal looped back to the second antenna; and the communication device determines the attenuation value based on a strength value of the measurement signal and a strength value of the looped back measured signal. In this way, a communication chip measures, through air interface loopback measurement, the attenuation value when the measurement signal is received. This facilitates measurement and can avoid interference caused by an external environment, such as a building, to measure the attenuation value.

In another possible implementation, that the communication device obtains an attenuation value of an air interface loopback signal through an antenna includes: The communication device periodically obtains a plurality of attenuation values based on a preset periodicity. That the communication device determines, based on the attenuation value, whether the antenna is blocked includes: The communication device determines, based on the plurality of obtained attenuation values, whether the antenna is blocked. In this way, whether the antenna is blocked can be more accurately determined based on the plurality of obtained attenuation values, and this reduces misjudgment.

In another possible implementation, that the communication device determines, based on the attenuation value, whether the antenna is blocked includes: The communication device determines whether a difference between the attenuation value within first preset duration and an attenuation calibration value is greater than a first preset threshold; if the difference between the attenuation value within the first preset duration and the attenuation calibration value is greater than the first preset threshold, the communication device determines that the antenna is blocked; and if the difference between the attenuation value within the first preset duration and the attenuation calibration value is not greater than the first preset threshold, the communication device determines that the antenna is not blocked.

In another possible implementation, that the communication device determines, based on the attenuation value, whether the antenna is blocked includes: When a difference between the attenuation value obtained before second preset duration and an attenuation calibration value is less than a second preset threshold, the communication device determines whether differences between a plurality of attenuation values consecutively obtained within the second preset duration and the attenuation calibration value are all greater than the second preset threshold; if the differences between the plurality of attenuation values consecutively obtained within the second preset duration and the attenuation calibration value are all greater than the second preset threshold, the communication device determines that the antenna is blocked; and if the differences between the plurality of attenuation values consecutively obtained within the second preset duration and the attenuation calibration value are not all greater than the second preset threshold, the communication device determines that the antenna is not blocked.

In another possible implementation, that the communication device determines that the antenna is blocked includes: The communication device determines, based on status indication information, that the antenna is blocked due to an abnormal holding posture, where the status indication information indicates that the communication device is in a landscape mode.

In another possible implementation, that the communication device outputs, to a user, alarm information prompting that the antenna is blocked may include: The communication device displays a user interface, where the user interface includes: an icon indicating that the antenna is blocked, and/or a pop-up message indicating that the antenna is blocked. The user is prompted by using the icon or the pop-up message that the antenna of the communication device is blocked. This is easy to implement and is more easily noticed by the user, and a prompt effect is improved.

In another possible implementation, the method further includes: The communication device displays a first icon, where the first icon indicates strength of the signal received by the communication device. That the communication device outputs, to a user, alarm information prompting that the antenna is blocked includes: The communication device updates and displays the first icon as a second icon, where the second icon indicates that the antenna is blocked.

According to a seventh aspect, an embodiment of this application provides a communication device, including a processor and a memory that is configured to store executable instructions of the processor. When the processor is configured to execute the instructions, the communication device is enabled to implement the antenna blocking alarm method according to any one of the first aspect or the possible implementations of the first aspect.

According to an eighth aspect, an embodiment of this application provides a computer-readable storage medium. The computer-readable storage medium stores computer program instructions. When the computer program instructions are executed by the communication device according to the fifth aspect, the communication device is enabled to implement the antenna blocking alarm method according to any one of the first aspect or the possible implementations of the first aspect.

According to a ninth aspect, an embodiment of this application provides a computer program product, including computer-readable code. When the computer-readable code runs in a communication device according to the fifth aspect, the communication device is enabled to implement the antenna blocking alarm method according to any one of the first aspect or the possible implementations of the first aspect.

It should be understood that, for beneficial effects of the seventh aspect to the ninth aspect, refer to related description in the sixth aspect. Details are not described herein again.

### BRIEF DESCRIPTION OF DRAWINGS

FIG. 1 is a signal strength indication icon according to a related technology;
FIG. 2 is another signal strength indication icon according to a related technology;
FIG. 3 is a schematic diagram of a structure of a communication device according to an embodiment of this application;
FIG. 4 is a schematic flowchart of an antenna blocking alarm method according to an embodiment of this application;
FIG. 5 is a schematic composition diagram of a wireless communication subsystem according to an embodiment of this application;
FIG. 6 is a schematic composition diagram of another wireless communication subsystem according to an example, which is not an embodiment of the present invention but helpful for understanding certain aspects thereof;
FIG. 7 is a schematic diagram of an interface when an antenna blocking alarm method is applied according to an embodiment of this application;
FIG. 8 is a schematic diagram of another interface when an antenna blocking alarm method is applied according to an embodiment of this application;
FIG. 9 is a schematic diagram of another interface when an antenna blocking alarm method is applied according to an embodiment of this application;
FIG. 10 is a schematic diagram of a structure of a communication chip according to an embodiment of this application;
FIG. 11 is a schematic diagram of a structure of another communication chip according to an embodiment of this application; and
FIG. 12 is a schematic diagram of a structure of another communication chip according to an embodiment of this application.

### DESCRIPTION OF EMBODIMENTS

During use of a wireless communication device (for example, a mobile phone), antenna performance is an important indicator that reflects a communication capability of the wireless communication device, and is also an important factor that affects user experience. Generally, an antenna of the wireless communication device is strictly designed and evaluated based on antenna directivity and multi-antenna performance consistency, to ensure that the wireless communication device has good antenna performance when used by a user. However, during the use of the wireless communication device, due to preferences and habits of some users, the antenna of the wireless communication device may be blocked, thereby affecting the antenna performance. For example, for protecting the device or aesthetics, the user uses a protective case made of a special material; the device is installed or placed in a special position; or the user holds the device with both hands. When the antenna performance of the wireless communication device deteriorates because the antenna is blocked, the user cannot learn of a specific reason for signal deterioration.

Therefore, a mobile phone is used as an example. In a related technology, the mobile phone may indicate, by using a signal energy indication (received signal strength indication, RSSI), energy (or strength) of a signal received by the mobile phone, to indicate, to a user, the strength of the signal received by the mobile phone.

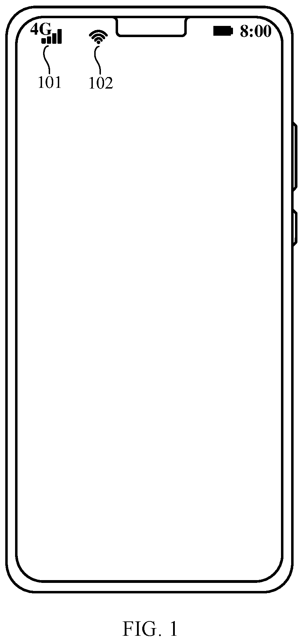

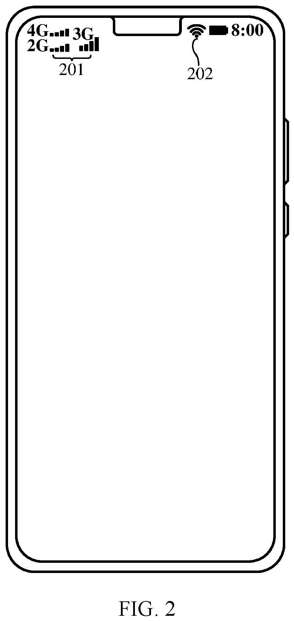

For example, after the mobile phone is connected to a fourth generation (4th generation, 4G) mobile communication network, the mobile phone may periodically perform RSSI measurement on a received 4G signal. As shown in FIG. 1, a 4G signal strength indication icon 101 is displayed in a status bar of the mobile phone. The strength indication icon 101 can display a signal level in real time. For example, a larger quantity of displayed bars indicates a better received signal (or higher signal strength), and a smaller quantity of displayed bars indicates a weaker received signal (or lower signal strength). For another example, the mobile phone may alternatively simultaneously perform RSSI measurement on received signals of second generation (2nd generation, 2G), third generation (3rd generation, 3G), and 4G mobile communication networks. As shown in FIG. 2, a strength indication icon 201 that can simultaneously indicate the signals of the 2G, 3G, and 4G mobile communication networks is displayed in the status bar of the mobile phone.

Alternatively, after the mobile phone is connected to a wireless fidelity (wireless fidelity, Wi-Fi) network, the mobile phone may perform RSSI measurement on a received Wi-Fi signal. As shown in FIG. 1, a Wi-Fi signal strength indication icon 102 is displayed in the status bar. Alternatively, as shown in FIG. 2, a Wi-Fi signal strength indication icon 202 is displayed in the status bar. The strength indication icon can display a signal level in real time. For example, a larger quantity of displayed bars indicates a better received signal (or higher signal strength), and a smaller quantity of displayed bars indicates a weaker received signal (or lower signal strength).

However, the RSSI measurement can only indicate the strength of the signal received by the mobile phone. Therefore, the strength indication icon displayed based on the RSSI measurement can only indicate the energy of the signal currently received by the mobile phone. For example, when a quantity of bars displayed in the strength indication icon decreases, it can only mean that the energy of the signal received by the mobile phone decreases. The energy of the signal received by the mobile phone may decrease because transmit power of a peer device (for example, a base station) decreases, signal attenuation between the mobile phone and the peer device increases (for example, a distance between the mobile phone and the peer device increases, or there is a building or wall between the mobile phone and the peer device), or because of an antenna performance exception of the mobile phone. Therefore, the user cannot learn, from the strength indication icon displayed on the mobile phone, whether the antenna performance of the mobile phone deteriorates because the antenna is blocked. As a result, the user cannot remove an obstacle to the antenna of the mobile phone in time, and user experience of using the mobile phone is affected.

To resolve the foregoing problem, an embodiment of this application provides an antenna blocking alarm method. The method may be applied to a communication device having an antenna. The method may include: The communication device obtains an attenuation value of an air interface loopback signal through an antenna, and determines, based on the attenuation value, whether the antenna of the communication device is blocked. After determining that the antenna of the communication device is blocked, the communication device may output, to a user, alarm information prompting that the antenna is blocked.

According to the method, the communication device may determine, based on the attenuation value of the signal, whether the antenna of the communication device is blocked. When it is determined that the antenna is blocked, the alarm information is output to prompt the user that the antenna is blocked. In this way, the user can find, based on the alarm information, that the antenna of the communication device is blocked, and then remove an obstacle (such as a protective case and hands) in a timely manner, to improve user experience.

The following describes the antenna blocking alarm method provided in this embodiment of this application with reference to the accompanying drawings by using examples.

It should be noted that the antenna blocking alarm method provided in this embodiment of this application may be applied to various communication devices, and the communication device may include a communication chip. For example, the communication device may be a mobile phone, a tablet computer, a wearable device having a wireless communication capability, a television, a notebook computer, a desktop computer, or an augmented reality (augmented reality, AR)/virtual reality (virtual reality, VR) device. For another example, the communication chip may be a wireless communication chip such as a Wi-Fi chip, a Bluetooth (Bluetooth) chip, or a global navigation satellite system (global navigation satellite system, GNSS) chip, or a mobile communication chip such as a 2G, a 3G, a 4G, or a fifth generation (5th generation, 5G) chip. Alternatively, the communication chip may be an integrated chip that integrates two or more of the foregoing chip functions. For example, the communication chip may be an integrated chip that integrates a Wi-Fi module, a Bluetooth module, and a GNSS module, to provide Wi-Fi, Bluetooth, and GNSS functions. For another example, the communication chip may be a modem (modem) chip that integrates a 2G module, a 3G module, a 4G module, and a 5G module.

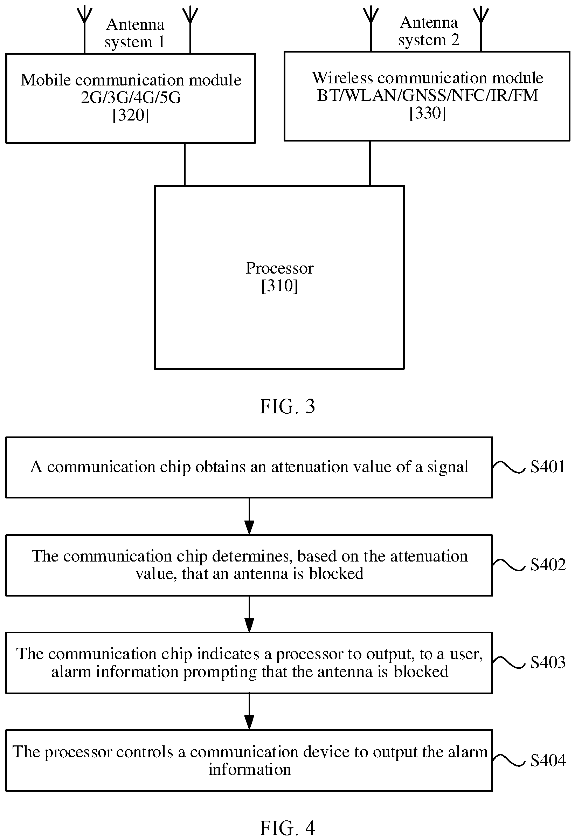

An example in which the communication device is a mobile phone is used to describe a structure of the communication device. FIG. 3 is a schematic diagram of a structure of a communication device according to an embodiment of this application.

As shown in FIG. 3, the communication device includes a processor 310, an antenna system 1, an antenna system 2, a mobile communication module 320, a wireless communication module 330, and the like. The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the communication device. The controller may generate an operation control signal based on instruction operation code and a time sequence signal, to complete control of instruction fetching and instruction execution.

The memory may be further disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor may directly invoke the instructions or the data from the memory. This avoids repeated access, reduces waiting time of the processor 310, and improves system efficiency.

A wireless communication function of the communication device is implemented by using the antenna system 1, the antenna system 2, the mobile communication module 320 (or referred to as the mobile communication chip), the wireless communication module 330 (or referred to as the wireless communication chip), or the like.

The antenna system 1 and the antenna system 2 are configured to transmit and receive an electromagnetic wave signal. Each antenna in the communication device may be configured to cover one or more communication frequency bands. Different antennas may be further multiplexed, to improve antenna utilization. For example, the antenna system 1 may be multiplexed as a diversity antenna of a wireless local area network. In some other embodiments, the antenna may be used in combination with a tuning switch.

The mobile communication module 320 may provide a solution that is applied to the communication device and that is for wireless communication including 2G, 3G, 4G, 5G, and the like. The mobile communication module 320 may include at least one filter, a switch, a power amplifier, a low noise amplifier (low noise amplifier, LNA), and the like. The mobile communication module 320 may receive an electromagnetic wave through the antenna system 1, perform processing such as filtering or amplification on the received electromagnetic wave, and transmit the electromagnetic wave to the modem processor for demodulation. The mobile communication module 320 may further amplify a signal modulated by the modem processor, and convert the signal into an electromagnetic wave for radiation through the antenna system 1. In some embodiments, at least some functional modules in the mobile communication module 320 may be disposed in the processor 310. In some embodiments, at least some functional modules in the mobile communication module 320 may be disposed in a same component as at least some modules in the processor 310.

The wireless communication module 330 may provide a solution that is applied to the communication device and that is for wireless communication including a wireless local area network (wireless local area network, WLAN) (for example, a Wi-Fi network), Bluetooth, a global navigation satellite system, and the like. The wireless communication module 330 may be one or more components integrating at least one communication processing module. The wireless communication module 330 receives an electromagnetic wave through the antenna system 2, performs frequency modulation and filtering processing on an electromagnetic wave signal, and sends a processed signal to the processor 310. The wireless communication module 330 may further receive a to-be-sent signal from the processor 310, perform frequency modulation and amplification on the signal, and convert the signal into an electromagnetic wave for radiation through the antenna system 2.

In some embodiments, in the communication device, the antenna system 1 and the mobile communication module 320 are coupled, and the antenna system 2 and the wireless communication module 330 are coupled, so that the communication device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), Bluetooth, a GNSS, a WLAN technology, and the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

It may be understood that the structure shown in this embodiment does not constitute a specific limitation on the communication device. In some other embodiments of this application, the communication device may include more or fewer components than those shown in the figure, or some components may be combined, or some components may be split, or there may be a different component layout. The components shown in the figure may be implemented by hardware, software, or a combination of software and hardware. For example, the communication device may further include an external memory interface, an internal memory, a universal serial bus (universal serial bus, USB) interface, a charging management module, a power management module, a battery, an audio module, a speaker, a receiver, a microphone, a headset jack, a sensor module, a button, a motor, an indicator, a camera, a display screen, a subscriber identification module (subscriber identification module, SIM) card interface, and the like. The sensor module may include a pressure sensor, a gyro sensor, an acceleration sensor, a touch sensor, and the like.

That the communication device is a mobile phone is still used as an example. The wireless communication module 330 shown in FIG. 3 may be used as the communication chip to form a chipset with the processor 310, and the mobile communication module 320 may also be used as the communication chip to form a chipset with the processor 310.

All methods in the following embodiments may be implemented by using the foregoing chipset.

That the communication device is a mobile phone is still used as an example. FIG. 4 is a schematic flowchart of an antenna blocking alarm method according to an embodiment of this application. As shown in FIG. 4, the method includes the following S401 to S404.

S401: A communication chip obtains an attenuation value of a signal.

The attenuation value may indicate attenuation of a strength value when the signal is received in comparison to a strength value when the signal is sent.

The communication chip performs air interface loopback measurement through an antenna to obtain the attenuation value of the signal. In other words, the communication chip obtains an attenuation value of an air interface loopback signal through the antenna. More specifically, antennas of the communication device include a first antenna and a second antenna (for example, the first antenna and the second antenna are two antennas in the antenna system 1 shown in FIG. 3, or two antennas in the antenna system 2) that are individually connected to the communication chip, and the communication chip controls the first antenna to transmit a measurement signal, and receives the measurement signal through the second antenna. Then, the communication chip determines the attenuation value based on a difference between a strength value of the measurement signal received through the second antenna and a strength value of the measurement signal transmitted through the first antenna. A coverage frequency of the first antenna and a coverage frequency of the second antenna need to have an overlapping frequency band, to avoid that the air interface loopback measurement cannot be completed because the measurement signal transmitted through the first antenna is not within the coverage frequency of the second antenna and therefore cannot be received.

It should be noted that a plurality of first antennas and/or second antennas may be separately disposed. In other words, in the air interface loopback measurement performed by the communication chip, a plurality of air interface loopbacks may be formed by using a plurality of antennas. For example, the communication chip may separately transmit a measurement signal through the plurality of first antennas, so that one second antenna separately receives the measurement signal transmitted through the plurality of first antennas, to form the plurality of air interface loopbacks. For example, the plurality of first antennas are a first antenna 1 and a first antenna 2, and one second antenna is a second antenna 1. The communication chip separately transmits a measurement signal through the first antenna 1 and the first antenna 2, and separately receives, through the second antenna 1, the measurement signal transmitted through the first antenna 1 and the measurement signal transmitted through the first antenna 2, to form two air interface loopbacks. Alternatively, the communication chip may separately transmit a measurement signal through the plurality of first antennas, so that the plurality of second antennas receive the corresponding measurement signal, to form a plurality of air interface loopbacks. For example, the plurality of first antennas are a first antenna 1 and a first antenna 2, and the plurality of second antennas are a second antenna 1 and a second antenna 2. The communication chip separately transmits a measurement signal through the first antenna 1 and the first antenna 2, receives, through the second antenna 1, the measurement signal transmitted through the first antenna 1, and receives, through the second antenna 2, the measurement signal transmitted through the first antenna 2, to form two air interface loopbacks. Alternatively, the communication chip may transmit a measurement signal through one first antenna, and the plurality of second antennas separately receive the measurement signal, to form a plurality of air interface loopbacks. For example, one first antenna is a first antenna 1, and the plurality of second antennas are a second antenna 1 and a second antenna 2. The communication chip transmits a measurement signal through the first antenna 1, and receives, through the second antenna 1 and the second antenna 2, the measurement signal transmitted through the first antenna 1, to form two air interface loopbacks.

In some embodiments, when the communication chip performs air interface loopback measurement by forming a plurality of air interface loopbacks, the communication chip may calculate first attenuation values corresponding to different air interface loopbacks, and then determine a final attenuation value based on the first attenuation values, to improve accuracy of the determined attenuation value. For example, the communication chip may use an average value of the plurality of obtained first attenuation values as the finally determined attenuation value. For example, when the communication chip separately transmits the measurement signal through the first antenna 1 and the first antenna 2, receives, through the second antenna 1, the measurement signal transmitted through the first antenna 1, and receives, through the second antenna 2, the measurement signal transmitted through the first antenna 2, to form the two air interface loopbacks, the communication chip determines an attenuation value 1 based on a difference between a strength value of the measurement signal transmitted through the first antenna 1 and a strength value of the measurement signal received through the second antenna 1 and transmitted through the first antenna 1. The communication chip then determines an attenuation value 2 based on a difference between a strength value of the measurement signal transmitted through the first antenna 2 and a strength value of the measurement signal received through the second antenna 1 and transmitted through the first antenna 2. Then, the communication chip determines a final attenuation value based on an average value of the attenuation value 1 and the attenuation value 2.

In some other embodiments, when the communication chip performs air interface loopback measurement by forming a plurality of air interface loopbacks, the communication chip may alternatively calculate and determine an attenuation value based on an average value of strength values of a measurement signal transmitted through the first antennas, and an average value of strength values of the measurement signal received through the second antennas. For example, when the communication chip separately transmits the measurement signal through the first antenna 1 and the first antenna 2, receives, through the second antenna 1, the measurement signal transmitted through the first antenna 1, and receives, through the second antenna 2, the measurement signal transmitted through the first antenna 2, to form the two air interface loopbacks, the communication chip calculates an average value (for example, referred to as a first average value) of a strength value of the measurement signal transmitted through the first antenna 1 and a strength value of the measurement signal transmitted through the first antenna 2. The communication chip then calculates an average value (for example, referred to as a second average value) of a strength value of the measurement signal received through the second antenna 1 and a strength value of the measurement signal received through the second antenna 2. Then, the communication chip calculates and obtains an attenuation value based on a difference between the first average value and the second average value.

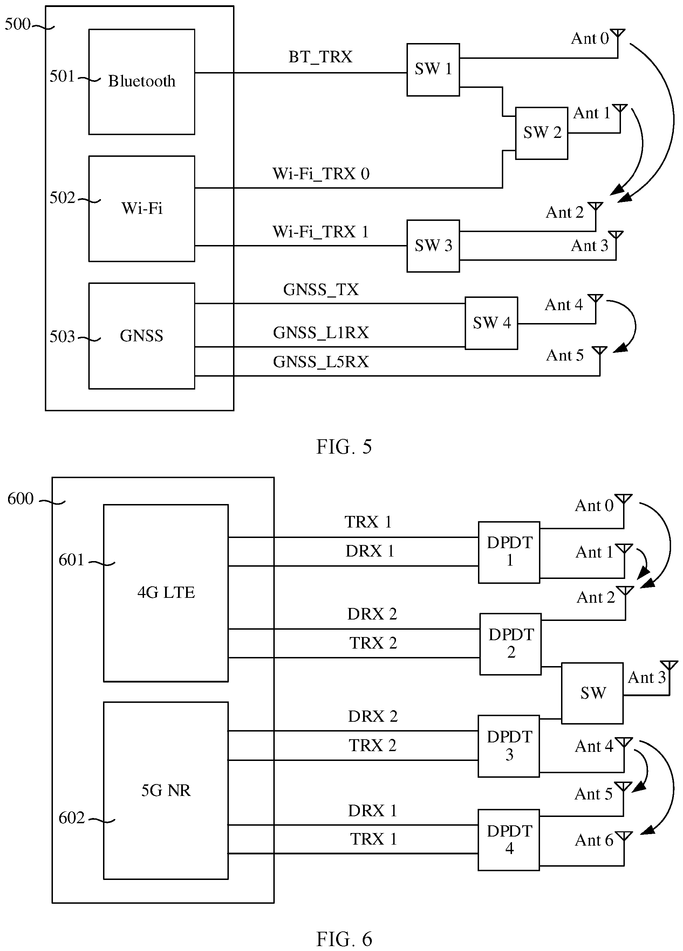

For example, FIG. 5 is a schematic composition diagram of a wireless communication subsystem according to an embodiment of this application. As shown in FIG. 5, the wireless communication subsystem includes a communication chip 500, a switch (switch, SW), and an antenna (Ant). Specifically, the communication chip 500 is a Wi-Fi/Bluetooth/GNSS chip. To be specific, the communication chip 500 integrates a Bluetooth module 501, a Wi-Fi module 502, and a GNSS module 503. A transmit/receive channel (BT_TRX) of the Bluetooth module 501 is connected to an Ant 0 through an SW 1, and the SW 1 is connected to an Ant 1 through an SW 2. A transmit/receive channel (Wi-Fi_TRX) 0 of the Wi-Fi module 502 is connected to the Ant 1 through the SW 2, and a Wi-Fi_TRX 1 of the Wi-Fi module 502 is connected to an Ant 2 and an Ant 3 through an SW 3. A transmit channel (GNSS_TX) and a first receive channel (GNSS_L1RX) of the GNSS module 503 are connected to an Ant 4 through an SW 4, and a second receive channel (GNSS_L5RX) is connected to an Ant 5. It should be noted that the communication chip 500 may transmit and receive a signal through a correspondingly connected antenna over a transmit and receive channel, may transmit a signal through a correspondingly connected antenna over a transmit channel, and may receive a signal through a correspondingly connected antenna over a receive channel.

The communication chip 500 shown in FIG. 5 is used as an example. When a Wi-Fi service of the communication chip 500 is idle, the Bluetooth module 501 of the communication chip generates a monophonic signal or a modulation signal of specific strength, for example, a first strength value, as a measurement signal. The Bluetooth module 501 of the communication chip 500 controls the SW 1 to transmit the measurement signal through the Ant 0 (where the Ant 0 is a first antenna in this embodiment of this application). The Wi-Fi module 502 of the communication chip 500 controls the SW 3 to receive the measurement signal through the Ant 2 (where the Ant 2 is a second antenna in this embodiment of this application). Then, the Wi-Fi module 502 of the communication chip 500 measures a strength value of the received measurement signal, for example, obtains a second strength value. The Wi-Fi module 502 of the communication chip 500 may obtain the first strength value from the Bluetooth module 501, and obtain an attenuation value of the measurement signal through calculation based on the first strength value and the second strength value. For example, a difference between the second strength value and the first strength value may be determined as the attenuation value of the measurement signal. In this way, air interface loopback measurement is completed.

Optionally, the Bluetooth module 501 of the communication chip 500 may further generate a monophonic signal or a modulation signal of specific strength, for example, a first strength value, as a measurement signal. The Bluetooth module 501 of the communication chip 500 controls the SW 1 and the SW 2 to separately transmit the measurement signal through the Ant 0 and the Ant 1 (where for example, the Ant 0 and the Ant 1 may be first antennas in this embodiment of this application). The Wi-Fi module 502 of the communication chip 500 controls the SW 3 to receive, through the Ant 2, the measurement signal separately transmitted through the Ant 0 and the Ant 1, to form two air interface loopbacks. Then, the Wi-Fi module 502 of the communication chip 500 measures a strength value of the received measurement signal transmitted through the Ant 0, for example, obtains a second strength value, and measures a strength value of the received measurement signal transmitted through the Ant 1, for example, obtains a third strength value. The Wi-Fi module 502 of the communication chip 500 may obtain the first strength value from the Bluetooth module 501, determine a difference between the first strength value and the second strength value as a first attenuation value, and determine a difference between the first strength value and the third strength value as a second attenuation value. Finally, a final attenuation value is determined based on an average value of the first attenuation value and the second attenuation value, and air interface loopback measurement is completed.

For another example, the GNSS module 503 of the communication chip 500 generates a monophonic signal or a modulation signal of specific strength, for example, a first strength value, as a measurement signal. The GNSS module 503 of the communication chip 500 controls the SW 4 to transmit the measurement signal through the Ant 4 (where for example, the Ant 4 may be a first antenna in this embodiment of this application). The GNSS module 503 of the communication chip 500 receives the measurement signal through the Ant 5 (where for example, the Ant 5 may be a second antenna in this embodiment of this application). Then, the GNSS module 503 of the communication chip 500 measures a strength value of the received measurement signal, for example, obtains a second strength value. The GNSS module 503 of the communication chip 500 may determine a difference between the first strength value and the second strength value as an attenuation value of the measurement signal, to complete air interface loopback measurement.

It should be noted that the communication chip may alternatively be a Wi-Fi chip, a Bluetooth chip, a GNSS chip, or the like that is independently disposed. For a specific implementation of air interface loopback measurement, refer to an air interface loopback measurement process of the communication chip shown in FIG. 5. Details are not described herein again.

For example, FIG. 6 is a schematic composition diagram of another wireless communication subsystem according to an example, which is not an embodiment of the present invention but helpful for understanding certain aspects thereof. As shown in FIG. 6, the wireless communication subsystem includes a communication chip 600, and the communication chip 600 is a 4G LTE/5G NR modem chip that integrates a 4G long term evolution (long term evolution, LTE) module 601 and a 5G new radio (new radio, NR) module 602. A transmit channel (TRX) 1 and a receive channel (DRX) 1 of the 4G LTE module 601 are connected to an antenna (Ant) 0 and an Ant 1 through a double pole double throw switch (DPDT) 1. A TRX 2 and a DRX 2 of the 4G LTE module 601 are connected to an Ant 2 and a switch (SW) through a DPDT 2, and the SW is connected to an Ant 3. A TRX 2 and a DRX 2 of the 5G NR module 602 are connected to an Ant 4 and the switch (SW) through a DPDT 3. A TRX 1 and a DRX 1 of the 5G NR module 602 are connected to an Ant 5 and an Ant 6 through a DPDT 4. It should be noted that the communication chip 600 may transmit a signal through a correspondingly connected antenna over a transmit channel, and receive the signal through a correspondingly connected antenna over a receive channel.

The communication chip 600 shown in FIG. 6 is used as an example. The 4G LTE module 601 of the communication chip 600 may generate a monophonic signal or a modulation signal of specific strength, for example, a first strength value, as a measurement signal. The 4G LTE module 601 of the communication chip 600 controls the DPDT 1 to separately transmit the measurement signal through the Ant 0 (where for example, the Ant 0 may be a first antenna in this embodiment of this application) and the Ant 1 (where for example, the Ant 1 may be a first antenna in this embodiment of this application). The 4G LTE module 601 of the communication chip 600 may control the DPDT 2 to receive, through the Ant 2 (where for example, the Ant 2 may be a second antenna in this embodiment of this application), the measurement signal separately transmitted through the Ant 0 and the Ant 1, to form two air interface loopbacks. Then, the 4G LTE module 601 of the communication chip 600 measures a strength value of the received measurement signal transmitted through the Ant 0, for example, obtains a second strength value, and measures a strength value of the received measurement signal transmitted through the Ant 1, for example, obtains a third strength value. The 4G LTE module 601 of the communication chip 600 may determine a difference between the first strength value and the second strength value as a first attenuation value, and determine a difference between the first strength value and the third strength value as a second attenuation value. Finally, a final attenuation value is determined based on an average value of the first attenuation value and the second attenuation value, and air interface loopback measurement is completed.

For another example, the 5G NR module 602 of the communication chip 600 may generate a monophonic signal or a modulation signal of specific strength, for example, a first strength value, as a measurement signal. The 5G NR module 602 of the communication chip 600 controls the DPDT 3 to transmit the measurement signal through the Ant 4. The 5G NR module 602 of the communication chip 600 controls the DPDT 4 to separately receive the measurement signal through the Ant 5 and the Ant 6, to form two air interface loopbacks. Then, the 5G NR module 602 of the communication chip 600 measures a strength value of the measurement signal received through the Ant 5, for example, obtains a second strength value, and measures a strength value of the measurement signal received through the Ant 6, for example, obtains a third strength value. The 5G NR module 602 of the communication chip 600 may determine a difference between the first strength value and the second strength value as a first attenuation value, and determine a difference between the first strength value and the third strength value as a second attenuation value. Finally, a final attenuation value is determined based on an average value of the first attenuation value and the second attenuation value, and air interface loopback measurement is completed.

The communication chip may alternatively be a 4G LTE chip, a 5G NR chip, or the like that is independently disposed. For a specific implementation of air interface loopback measurement, refer to an air interface loopback measurement process of the communication chip shown in FIG. 6. Details are not described herein again.

It should be noted that the first strength value, the second strength value, and the third strength value may be RSSI values respectively corresponding to the measurement signal. Correspondingly, the communication chip may obtain an RSSI value by performing RSSI detection on the received measurement signal. This is not limited herein.

S402: The communication chip determines, based on the attenuation value, that the antenna is blocked.

In some possible implementations, the communication chip may periodically obtain attenuation values of a signal. Then, within preset duration, the communication chip compares a plurality of obtained attenuation values with an attenuation calibration value, to determine that the antenna is blocked. For example, within the preset duration (for example, within first preset duration), when a difference between an attenuation value and the attenuation calibration value is continuously greater than a preset threshold (for example, a first preset threshold), it may be determined that the antenna is blocked. For example, within specific duration (for example, 8 hours), when a difference between an attenuation value obtained each time and the attenuation calibration value is greater than the preset threshold (for example, 5 dB), it may be determined that the antenna is blocked.

Optionally, that the communication chip determines, based on the attenuation value, that the antenna is blocked may alternatively include: Within preset duration, when a quantity of times that a difference between the attenuation value and the attenuation calibration value is greater than the preset threshold is greater than a preset quantity of times, it may be determined that the antenna is blocked. For example, within specific duration (for example, 8 hours), when differences between attenuation values obtained six times and the attenuation calibration value are all greater than the preset threshold (for example, 5 dB), it may be determined that the antenna is blocked.

A reason why the antenna is blocked may include that the antenna is blocked by a protective case, or the antenna is blocked due to an abnormal holding posture of a user. The communication chip may further determine, based on duration in which the difference between the attenuation value and the attenuation calibration value is greater than the preset threshold, a reason why the antenna is blocked. For example, within specific duration (for example, 8 hours), when a difference between an attenuation value obtained each time and the attenuation calibration value is greater than the preset threshold (for example, 5 dB), it may be determined that the antenna may be blocked by a protective case. For another example, when a difference between the attenuation value obtained before preset duration (for example, second preset duration) and the attenuation calibration value is less than a preset threshold (for example, a second preset threshold), the communication device determines whether differences between a plurality of attenuation values consecutively obtained within the second preset duration and the attenuation calibration value are all greater than the second preset threshold. If the differences between the plurality of attenuation values consecutively obtained within the second preset duration and the attenuation calibration value are all greater than the second preset threshold, it is determined that the antenna is blocked. For example, when differences between attenuation values obtained in the last few times (for example, attenuation values obtained several times in the last 5 minutes) and the attenuation calibration value are all greater than a preset threshold (for example, 20 dB), and a difference between a previously obtained attenuation value and the attenuation calibration value is less than the preset threshold, it may be determined, with reference to a status indication of the communication device (for example, a landscape display indication of a mobile phone), that the antenna is blocked due to an abnormal holding posture of a user.

It should be noted that, in the foregoing examples, when the difference between the attenuation value and the attenuation calibration value is equal to the preset threshold, it may be determined that the antenna is blocked, or it may be determined that the antenna is not blocked. This is not limited herein. The attenuation calibration value may be an attenuation value of a signal obtained when the antenna is not blocked (for example, when the communication device is bare), for example, an attenuation value that is of a measurement signal and that is determined and obtained through air interface loopback measurement when the communication device is bare.

S403. The communication chip indicates a processor to output, to the user, alarm information prompting that the antenna is blocked.

In some possible implementations, the alarm information may include a reason why the antenna is blocked and that is determined by the communication chip. For determining the reason why the antenna is blocked, refer to the description in S402.

S404: The processor controls the communication device to output the alarm information.

For example, the alarm information output by the communication device may be an icon indicating that the antenna is blocked, and/or a pop-up message indicating that the antenna is blocked. For example, when the processor receives indication information, the processor controls the communication device to display the pop-up message. For example, the pop-up message may be "The antenna of the mobile phone is blocked".

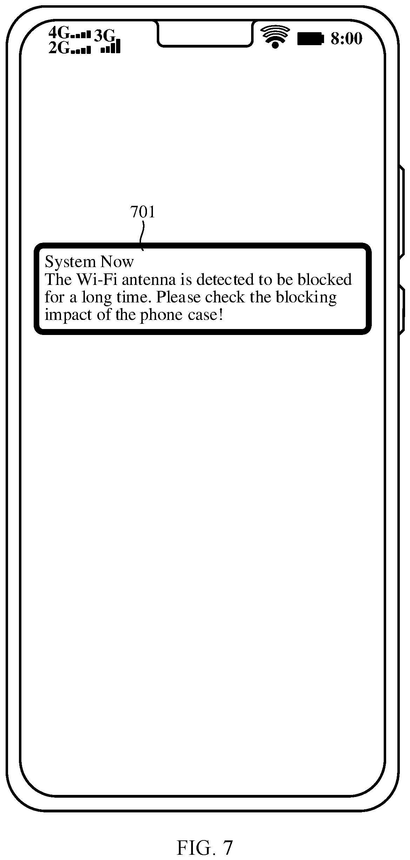

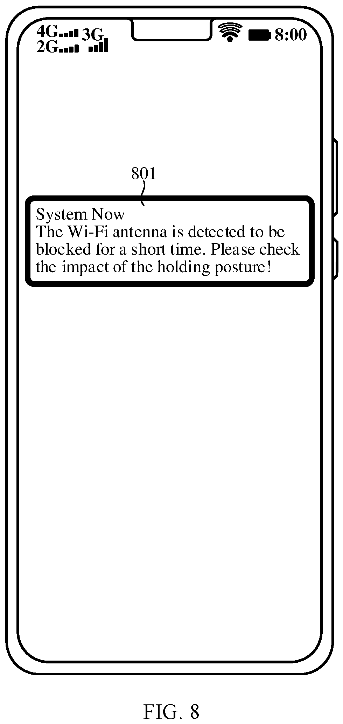

In some possible implementations, the processor may further determine, based on a specific communication chip from which a received indication comes, that a specific antenna is blocked. Then, the alarm information is output based on a reason that is indicated by the communication chip and why the antenna is blocked, and the determined blocked antenna, to prompt a user why a specific antenna is blocked. For example, when the communication chip indicates that the antenna is blocked by the protective case, and the indication is sent by the Wi-Fi module 502 of the communication chip 500 shown in FIG. 5, the processor may determine that a Wi-Fi antenna is blocked by the protective case. The processor may control the communication device to display a pop-up message. As shown in FIG. 7, a pop-up window message 701 may be "The Wi-Fi antenna is detected to be blocked for a long time. Please check the blocking impact of the phone case!". For another example, when the communication chip indicates that the antenna is blocked due to an impact of an abnormal holding posture, and the indication is sent by the Wi-Fi module 502 of the communication chip 500 shown in FIG. 5, the processor may determine that a Wi-Fi antenna is blocked due to the impact of the holding posture. The processor may control the communication device to display a pop-up message. As shown in FIG. 8, a pop-up window message 801 may be "The Wi-Fi antenna is detected to be blocked for a short time. Please check the impact of the holding posture!".

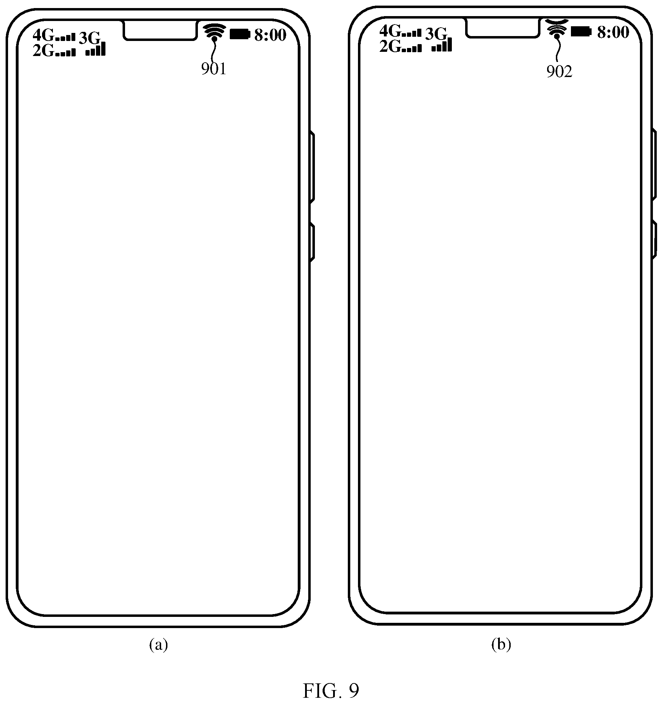

For another example, when the communication chip indicates that the antenna is blocked by the protective case, and the indication is sent by the Wi-Fi module 502 of the communication chip 500 shown in FIG. 5, the processor may determine that a Wi-Fi antenna is blocked by the protective case. The processor may control the communication device to display an icon indicating that the Wi-Fi antenna is blocked. For example, before the processor of the mobile phone receives the indication of the communication chip, as shown in (a) in FIG. 9, a first icon 901 indicating a Wi-Fi signal is displayed in a status bar of the mobile phone. After the processor of the mobile phone receives the indication of the communication chip, as shown in (b) in FIG. 9, a second icon 902 is displayed in the status bar of the mobile phone. The second icon 902 indicates that the Wi-Fi antenna is blocked.

According to the foregoing method, the communication chip may determine, based on the attenuation value of the signal when the signal is received, whether the communication device is blocked, and indicate the processor of the communication device to control the communication device to output the alarm information, to prompt the user that the antenna is blocked. In this way, the user can find, based on the alarm information, that the antenna of the communication device is blocked, and then remove an obstacle (such as a protective case and hands) in a timely manner, to improve user experience.

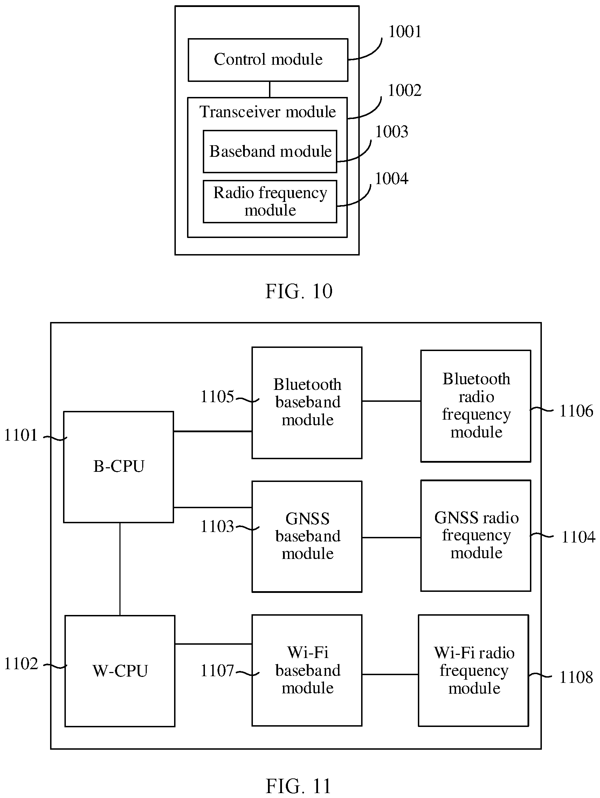

Corresponding to the method in the foregoing embodiments, an embodiment of this application further provides a communication chip. The communication chip may be applied to a communication device, and is configured to implement functions of the communication chip in the method in the foregoing embodiments. The functions of the communication chip may be implemented by using hardware. The communication chip includes one or more modules corresponding to the functions. For example, FIG. 10 is a schematic diagram of a structure of a communication chip. As shown in FIG. 10, the communication chip includes a control module 1001, a transceiver module 1002, and the like. The transceiver module 1002 may further include a baseband module 1003, a radio frequency module 1004, and the like.

The control module 1001 may be configured to obtain an attenuation value of an air interface loopback signal through an antenna; determine, based on the attenuation value, whether the antenna is blocked; and when determining that the antenna is blocked, indicate a processor to output, to a user, alarm information prompting that the antenna is blocked.

In a possible implementation, the antenna may include a first antenna and a second antenna. The transceiver module 1002 may be configured to transmit, based on control of the control module, a measurement signal through the first antenna, receive the measurement signal looped back to the second antenna, and measure a strength value of the looped back measurement signal. The control module 1001 may be specifically configured to determine the attenuation value based on a strength value of the measurement signal and the strength value of the looped back measurement signal.

In another possible implementation, the transceiver module 1002 may implement functions of the transceiver module 1002 by using the baseband module 1003 and the radio frequency module 1004. For example, the baseband module 1003 may be configured to generate a measurement signal based on control of the control module 1001. The radio frequency module 1004 may be configured to transmit the measurement signal through the first antenna, and receive the measurement signal looped back to the second antenna. The baseband module 1003 may be further configured to measure a strength value of the looped back measurement signal.

For example, the communication chip 500 shown in FIG. 5 is used as an example. As shown in FIG. 11, the communication chip includes a B-central processing unit (central processing unit, CPU) 1101 (that is, a first control module) and a W-CPU 1102 (that is, a second control module) that are connected to each other, a GNSS baseband module 1103 and a GNSS radio frequency module 1104 that are connected to each other, a Bluetooth baseband module 1105 and a Bluetooth radio frequency module 1106 that are connected to each other, and a Wi-Fi baseband module 1107 and a Wi-Fi radio frequency module 1108 that are connected to each other. The Bluetooth baseband module 1105 and the GNSS baseband module 1103 are separately connected to the B-CPU 1101, and the Wi-Fi baseband module 1107 is connected to the W-CPU 1102. The B-CPU 1101, the Bluetooth baseband module 1105, and the Bluetooth radio frequency module 1106 forms the Bluetooth module 501 of the communication chip 500 shown in FIG. 5. The B-CPU 1101, the GNSS baseband module 1103, and the GNSS radio frequency module 1104 may form the GNSS module 503 of the communication chip 500 shown in FIG. 5. The W-CPU 1102, the Wi-Fi baseband module 1107, and the Wi-Fi radio frequency module 1108 forms the Wi-Fi module 502 of the communication chip 500 shown in FIG. 5. The foregoing functions of the communication chip 500 shown in FIG. 5 are implemented by using the communication chip. When a Wi-Fi service is idle, the B-CPU 1101 controls the Bluetooth baseband module 1105 to generate a monophonic signal or a modulation signal of specific strength, for example, a first strength value, as a measurement signal. The Bluetooth radio frequency module 1106 may amplify the measurement signal to a radio frequency band, and transmit the measurement signal through the Ant 0 shown in FIG. 5. Then, the Wi-Fi radio frequency module 1108 receives the measurement signal through the Ant 2 shown in FIG. 5, and converts the measurement signal to a baseband frequency band. The Wi-Fi baseband module 1107 may measure a strength value of the measurement signal of the baseband frequency band, for example, obtain a second strength value. Then, the W-CPU 1102 may obtain the first strength value from the B-CPU 1101, and obtain the second strength value from the Wi-Fi baseband module 1107. A difference between the first strength value and a second strength value that is obtained by converting post-gain strength values generated by the Bluetooth radio frequency module 1106 and the Wi-Fi radio frequency module 1108, is determined as the attenuation value of the measurement signal, and air interface loopback measurement is completed.

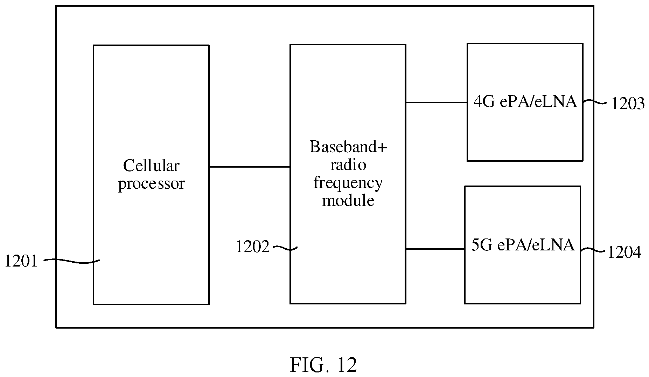

For another example, the communication chip 600 shown in FIG. 6 is used as an example. As shown in FIG. 12, the communication chip may include a cellular processor (cellular processor) 1201 (that is, a control module), a baseband module, a radio frequency module (which may be integrated into one module, that is, a baseband+radio frequency module 1202), a 4G power/low noise amplifier (4G external PA/external LNA, 4G ePA/eLNA) 1203, and a 5G power/low noise amplifier (5G external PA/external LNA, 5G ePA/eLNA) 1204. The cellular processor 1201, the baseband+radio frequency module 1202, and the 4G ePA/eLNA 1203 may form the 4G LTE module 601 of the communication chip 600 shown in FIG. 6. The cellular processor 1201, the baseband+radio frequency module 1202, and the 5G ePA/eLNA 1204 may form the 5G NR module 602 of the communication chip 600 shown in FIG. 6. The foregoing functions of the communication chip 600 shown in FIG. 6 may be implemented by using the communication chip. For example, the cellular processor 1201 may control the baseband module in the baseband+radio frequency module 1202 to generate a monophonic signal or a modulation signal of specific strength, for example, a first strength value, as a measurement signal, and the radio frequency module amplifies the measurement signal to a radio frequency band. Then, the 4G ePA/eLNA 1203 further amplifies the measurement signal and separately transmits the measurement signal through the Ant 0 and the Ant 1 shown in FIG. 6. Then, the 4G ePA/eLNA 1203 may receive, through the Ant 2 shown in FIG. 6, the measurement signal separately transmitted through the Ant 0 and the Ant 1, to form two air interface loopbacks. The radio frequency module in the baseband+radio frequency module 1202 may convert the separately received measurement signals to a baseband frequency band, and then the baseband module separately measures strength values of the two received measurement signals, for example, obtains a second strength value and a third strength value. The cellular processor 1201 may obtain the second strength value and the third strength value, obtain a first attenuation value based on a difference between the first strength value and the second strength value, and obtain a second attenuation value based on a difference between the first strength value and the third strength value. Finally, a final attenuation value is determined based on an average value of the first attenuation value and the second attenuation value, and air interface loopback measurement is completed.

In another possible implementation, the control module 1001 may be specifically configured to periodically obtain a plurality of attenuation values based on a preset periodicity, and determine, based on the plurality of obtained attenuation values, whether the antenna is blocked.

In another possible implementation, the control module 1001 may be specifically configured to: determine whether a difference between the attenuation value within first preset duration and an attenuation calibration value is greater than a first preset threshold; if the difference between the attenuation value within the first preset duration and the attenuation calibration value is greater than the first preset threshold, determine that the antenna is blocked; and if the difference between the attenuation value within the first preset duration and the attenuation calibration value is not greater than the first preset threshold, determine that the antenna is not blocked.

In another possible implementation, the control module 1001 may be specifically configured to: when a difference between the attenuation value obtained before second preset duration and an attenuation calibration value is less than a second preset threshold, determine whether differences between a plurality of attenuation values consecutively obtained within the second preset duration and the attenuation calibration value are all greater than the second preset threshold; if the differences between the plurality of attenuation values consecutively obtained within the second preset duration and the attenuation calibration value are all greater than the second preset threshold, determine that the antenna is blocked; and if the differences between the plurality of attenuation values consecutively obtained within the second preset duration and the attenuation calibration value are not all greater than the second preset threshold, determine that the antenna is not blocked.

In another possible implementation, the control module 1001 may be specifically configured to determine, based on status indication information, that the antenna is blocked due to an abnormal holding posture, where the status indication information indicates that a communication device is in a landscape mode.

It should be understood that division into the units or modules (referred to as units) in the communication chip is merely logical function division. In actual implementation, all or some of the units or modules may be integrated into one physical entity, or may be physically separated.

For example, each unit may be an independently disposed processing element, or may be integrated into a chip for implementation.

In an example, the unit in the communication chip may be one or more integrated circuits configured to implement the foregoing methods, for example, one or more ASICs, one or more DSPs, one or more FPGAs, or a combination of at least two of the integrated circuit forms.

For another example, the units may be integrated and implemented in a form of a system-on-a-chip (system-on-a-chip, SOC).

An embodiment of this application may further provide a communication device. The communication device may include a processor, and a memory configured to store executable instructions of the processor. When the processor is configured to execute the instructions, the communication device is enabled to implement the antenna blocking alarm method described in the foregoing embodiments. The memory may be located inside the communication device, or may be located outside the communication device.

An embodiment of this application further provides a computer program product, including computer instructions run by a communication device, such as the foregoing communication device.

An embodiment of this application further provides a computer-readable storage medium, and the computer-readable storage medium stores computer program instructions. When the computer program instructions are executed by a communication device, the communication device is enabled to implement the antenna blocking alarm method described in the foregoing method embodiments.

## Claims

1. An antenna blocking alarm method performed by a communication chip (500) or a communication device comprising the communication chip (500), the method comprising:
obtaining (S401) an attenuation value of an air interface loopback signal through an antenna;
determining (S402), based on the attenuation value, whether the antenna is blocked; and
when determining that the antenna is blocked, indicating (S403), by the communication chip (500), a processor to output, to a user, alarm information prompting that the antenna is blocked, or outputting, by the communication device to the user, the alarm information prompting that the antenna is blocked;
wherein the antenna comprises a first antenna and a second antenna; and
the obtaining (S401) an attenuation value of an air interface loopback signal through an antenna comprises:
transmitting a measurement signal through the first antenna, and receiving the measurement signal looped back to the second antenna; and
determining the attenuation value based on a strength value of the measurement signal and a strength value of the looped back measurement signal;
wherein the communication chip (500) comprises a Bluetooth module (501) and a wireless fidelity Wi-Fi network module (502), and the transmitting a measurement signal through the first antenna, and receiving the measurement signal looped back to the second antenna comprises:
when a Wi-Fi service of the communication chip (500) is idle, generating, by the Bluetooth module (501), a monophonic signal or a modulation signal of specific strength as the measurement signal;
transmitting, by the Bluetooth module (501), the measurement signal through the first antenna;
receiving, by the Wi-Fi network module (502), the measurement signal looped back to the second antenna; and
determining, by the Wi-Fi network module (502), the attenuation value based on the strength value of the measurement signal and the strength value of the looped back measurement signal.

2. The method according to claim 1, wherein
the obtaining (S401) an attenuation value of an air interface loopback signal through an antenna comprises:
periodically obtaining a plurality of attenuation values based on a preset periodicity; and
the determining (S402), based on the attenuation value, whether the antenna is blocked comprises:
determining, based on the plurality of obtained attenuation values, whether the antenna is blocked.

3. The method according to claim 1 or 2, wherein the determining (S402), based on the attenuation value, whether the antenna is blocked comprises:
determining whether a difference between the attenuation value within first preset duration and an attenuation calibration value is greater than a first preset threshold;
if the difference between the attenuation value within the first preset duration and the attenuation calibration value is greater than the first preset threshold, determining that the antenna is blocked; and
if the difference between the attenuation value within the first preset duration and the attenuation calibration value is not greater than the first preset threshold, determining that the antenna is not blocked.

4. The method according to claim 2, wherein the determining (S402), based on the attenuation value, whether the antenna is blocked comprises:
when a difference between the attenuation value obtained before second preset duration and an attenuation calibration value is less than a second preset threshold, determining whether differences between a plurality of attenuation values consecutively obtained within the second preset duration and the attenuation calibration value are all greater than the second preset threshold;
if the differences between the plurality of attenuation values consecutively obtained within the second preset duration and the attenuation calibration value are all greater than the second preset threshold, determining that the antenna is blocked; and
if the differences between the plurality of attenuation values consecutively obtained within the second preset duration and the attenuation calibration value are not all greater than the second preset threshold, determining that the antenna is not blocked.

5. The method according to any one of claims 1 to 4, wherein the outputting, by the communication device to the user, the alarm information prompting that the antenna is blocked comprises:
displaying, by the communication device, a user interface, wherein the user interface comprises: an icon indicating that the antenna is blocked, and/or a pop-up message indicating that the antenna is blocked.

6. The method according to any one of claims 1 to 4, wherein the method further comprises:
displaying, by the communication device, a first icon, wherein the first icon indicates strength of the signal received by the communication device; and
the outputting, by the communication device to a user, alarm information prompting that the antenna is blocked comprises:
updating and displaying, by the communication device, the first icon as a second icon, wherein the second icon indicates that the antenna is blocked.

7. A communication chip (500) for a communication device comprising an antenna, wherein the antenna comprises a first antenna and a second antenna, and wherein the communication chip (500) comprises:
a control module (1001) configured to obtain an attenuation value of an air interface loopback signal through the antenna; determine, based on the attenuation value, whether the antenna is blocked; and when determining that the antenna is blocked, indicate a processor (310) to output, to a user, alarm information prompting that the antenna is blocked;
wherein the communication chip further comprises a transceiver module (1002);
the transceiver module (1002) is configured to transmit, based on control of the control module (1001), a measurement signal through the first antenna, receive the measurement signal looped back to the second antenna, and measure a strength value of the looped back measurement signal; and
the control module (1001) is specifically configured to determine the attenuation value based on a strength value of the measurement signal and the strength value of the looped back measurement signal;
wherein the transceiver module (1002) comprises a baseband module (1003) and a radio frequency module (1004);
the baseband module (1003) is configured to generate the measurement signal based on the control of the control module (1001);
the radio frequency module (1004) is configured to transmit the measurement signal through the first antenna, and receive the measurement signal looped back to the second antenna; and
the baseband module (1003) is further configured to measure the strength value of the looped back measurement signal;
wherein the control module (1001) comprises a first control module (1101) and a second control module (1102), the baseband module (1003) comprises a Bluetooth baseband module (1105) and a wireless fidelity Wi-Fi baseband module (1107), and the radio frequency module (1104) comprises a Bluetooth radio frequency module (1106) and a Wi-Fi radio frequency module (1108);
when a Wi-Fi service of the communication chip (500) is idle, the first control module (1101) is configured to control the Bluetooth baseband module (1105) to generate a monophonic signal or a modulation signal of specific strength as the measurement signal;
the Bluetooth baseband module (1105) is configured to generate the measurement signal based on control of the first control module (1101);
the Bluetooth radio frequency module (1106) is configured to transmit the measurement signal through the first antenna;
the Wi-Fi radio frequency module (1108) is configured to receive the measurement signal looped back to the second antenna;
the Wi-Fi baseband module (1107) is configured to measure the strength value of the looped back measurement signal; and
the second control module (1102) is configured to determine the attenuation value based on the strength value of the measurement signal and the strength value of the looped back measurement signal.

8. The communication chip (500) according to claim 7, wherein
the communication chip (500) configured to obtain an attenuation value of an air interface loopback signal through an antenna comprises that
the communication chip (500) is configured to periodically obtain a plurality of attenuation values based on a preset periodicity and to determine based on the attenuation value, whether the antenna is blocked,
wherein the communication chip (500) configured to determine based on the attenuation value, whether the antenna is blocked comprises that
the communication chip (500) is configured to determine based on the plurality of obtained attenuation values, whether the antenna is blocked.

9. The communication chip (500) according to claim 7 or 8, wherein the communication chip (500) configured to determine based on the attenuation value, whether the antenna is blocked comprises that
the communication chip (500) is configured to determine whether a difference between the attenuation value within first preset duration and an attenuation calibration value is greater than a first preset threshold;
if the difference between the attenuation value within the first preset duration and the attenuation calibration value is greater than the first preset threshold, the communication chip (500) is configured to determine that the antenna is blocked; and
if the difference between the attenuation value within the first preset duration and the attenuation calibration value is not greater than the first preset threshold, the communication chip (500) is configured to determine that the antenna is not blocked.

10. The communication chip (500) according to claim 8, wherein the communication chip (500) configured to determine based on the attenuation value, whether the antenna is blocked comprises that
when a difference between the attenuation value obtained before second preset duration and an attenuation calibration value is less than a second preset threshold, the communication chip (500) is configured to determine whether differences between a plurality of attenuation values consecutively obtained within the second preset duration and the attenuation calibration value are all greater than the second preset threshold;
if the differences between the plurality of attenuation values consecutively obtained within the second preset duration and the attenuation calibration value are all greater than the second preset threshold, the communication chip (500) is configured to determine that the antenna is blocked; and
if the differences between the plurality of attenuation values consecutively obtained within the second preset duration and the attenuation calibration value are not all greater than the second preset threshold, the communication chip (500) is configured to determine that the antenna is not blocked.

11. A communication device comprising an antenna and a chipset, wherein the antenna comprises a first antenna and a second antenna, wherein the chipset comprises the communication chip (500) according to any one of claims 7 to 10 and a processor (310), and wherein the processor (310) is configured to control, based on an indication of the communication chip (500), the communication device to output, to the user, the alarm information prompting that the antenna is blocked.

12. A computer-readable storage medium having stored thereon instructions which, when executed by the communication device of claim 11, cause the communication device to carry out the method according to any one of claims 1 to 6.

13. A computer program product comprising instructions which, when executed by the communication device of claim 11, cause the communication device to carry out the method according to any one of claims 1 to 6.

## Patentansprüche

1. Antennenblockierungswarnverfahren, das durch einen Kommunikationschip (500) oder eine Kommunikationsvorrichtung, die den Kommunikationschip (500) umfasst, ausgeführt wird, wobei das Verfahren Folgendes umfasst:
Erlangen (S401) eines Dämpfungswerts eines Rückschleifsignals der Luftschnittstelle über eine Antenne;
Bestimmen (S402), basierend auf dem Dämpfungswert, ob die Antenne blockiert ist; und
wenn bestimmt wird, dass die Antenne blockiert ist, Angeben (S403), durch den Kommunikationschip (500), eines Prozessors zum Ausgeben von Alarminformationen an einen Benutzer, die auslösen,
dass die Antenne blockiert wird, oder Ausgeben, durch die Kommunikationsvorrichtung, von Alarminformationen an den Benutzer, die auslösen, dass die Antenne blockiert wird;
wobei die Antenne eine erste Antenne und eine zweite Antenne umfasst; und
das Erlangen (S401) eines Dämpfungswerts eines Rückschleifsignals der Luftschnittstelle über eine Antenne Folgendes umfasst:
Übertragen eines Messsignals über die erste Antenne und Empfangen des Messsignals, das zu der zweiten Antenne zurückgeschleift wird; und
Bestimmen des Dämpfungswerts basierend auf einem Festigkeitswert des Messsignals und einem Festigkeitswert des zurückgeschleiften Messsignals;
wobei der Kommunikationschip (500) ein Bluetooth-Modul (501) und ein drahtloses Wireless-Fidelity(Wi-Fi)-Netzwerkmodul (502) umfasst und das Übertragen eines Messsignals über die erste Antenne und das Empfangen des Messsignals, das zu der zweiten Antenne zurückgeschleift wird, Folgendes umfasst:
wenn ein Wi-Fi-Dienst des Kommunikationschips (500) inaktiv ist, Generieren, durch das Bluetooth-Modul (501), eines monophonen Signals oder eines Modulationssignals spezifischer Stärke als das Messsignal;
Übertragen, durch das Bluetooth-Modul (501), des Messsignals über die erste Antenne;
Empfangen, durch das Wi-Fi-Netzwerkmodul (502), des Messsignals, das zu der zweiten Antenne zurückgeschleift wird; und
Bestimmen, durch das Wi-Fi-Netzwerkmodul (502), des Dämpfungswerts basierend auf dem Festigkeitswert des Messsignals und dem Festigkeitswert des zurückgeschleiften Messsignals.

2. Verfahren nach Anspruch 1, wobei
das Erlangen (S401) eines Dämpfungswerts eines Rückschleifsignals der Luftschnittstelle über eine Antenne Folgendes umfasst:
periodisches Erlangen einer Vielzahl von Dämpfungswerten basierend auf einer vorgegebenen Periodizität; und
das Bestimmen (S402), basierend auf dem Dämpfungswert, ob die Antenne blockiert ist, Folgendes umfasst:
Bestimmen, basierend auf der Vielzahl von erlangten Dämpfungswerten, ob die Antenne blockiert ist.

3. Verfahren nach Anspruch 1 oder 2, wobei das Bestimmen (S402), basierend auf dem Dämpfungswert, ob die Antenne blockiert ist, Folgendes umfasst:
Bestimmen, ob eine Differenz zwischen dem Dämpfungswert innerhalb der ersten vorgegebenen Dauer und einem Dämpfungskalibrierungswert größer als ein erster vorgegebener Schwellenwert ist;
falls die Differenz zwischen dem Dämpfungswert innerhalb der ersten vorgegebenen Dauer und dem Dämpfungskalibrierungswert größer als der erste vorgegebene Schwellenwert ist, Bestimmen, dass die Antenne blockiert ist; und
falls die Differenz zwischen dem Dämpfungswert innerhalb der ersten vorgegebenen Dauer und dem Dämpfungskalibrierungswert nicht größer als der erste vorgegebene Schwellenwert ist, Bestimmen, dass die Antenne nicht blockiert ist.

4. Verfahren nach Anspruch 2, wobei das Bestimmen (S402), basierend auf dem Dämpfungswert, ob die Antenne blockiert ist, Folgendes umfasst:
wenn eine Differenz zwischen dem Dämpfungswert, der vor der zweiten vorgegebenen Dauer erlangt wird, und einem Dämpfungskalibrierungswert kleiner als ein zweiter vorgegebener Schwellenwert ist, Bestimmen, ob Differenzen zwischen einer Vielzahl von Dämpfungswerten, die innerhalb der zweiten vorgegebenen Dauer nacheinander erlangt werden, und dem Dämpfungskalibrierungswert alle größer als der zweite vorgegebene Schwellenwert sind;
falls die Differenzen zwischen der Vielzahl von Dämpfungswerten, die innerhalb der zweiten vorgegebenen Dauer nacheinander erlangt werden, und dem Dämpfungskalibrierungswert alle größer als der zweite vorgegebene Schwellenwert sind, Bestimmen, dass die Antenne blockiert ist; und
falls die Differenzen zwischen der Vielzahl von Dämpfungswerten, die innerhalb der zweiten vorgegebenen Dauer nacheinander erlangt werden, und dem Dämpfungskalibrierungswert nicht alle größer als der zweite vorgegebene Schwellenwert sind, Bestimmen, dass die Antenne nicht blockiert ist.

5. Verfahren nach einem der Ansprüche 1 bis 4, wobei das Ausgeben, durch die Kommunikationsvorrichtung, der Alarminformationen an den Benutzer, die auslösen, dass die Antenne blockiert ist, Folgendes umfasst:
Anzeigen, durch die Kommunikationsvorrichtung, einer Benutzerschnittstelle, wobei die Benutzerschnittstelle Folgendes umfasst: ein Symbol, das anzeigt, dass die Antenne blockiert ist, und/oder eine Popup-Nachricht, die anzeigt, dass die Antenne blockiert ist.

6. Verfahren nach einem der Ansprüche 1 bis 4, wobei das Verfahren ferner Folgendes umfasst:
Anzeigen, durch die Kommunikationsvorrichtung, eines ersten Symbols, wobei das erste Symbol die Stärke des Signals anzeigt, das durch die Kommunikationsvorrichtung empfangen wird; und
das Ausgeben, durch die Kommunikationsvorrichtung, von Alarminformationen an einen Benutzer, die auslösen, dass die Antenne blockiert wird, Folgendes umfasst:
Aktualisieren und Anzeigen, durch die Kommunikationsvorrichtung, des ersten Symbols als ein zweites Symbol, wobei das zweite Symbol anzeigt, dass die Antenne blockiert ist.

7. Kommunikationschip (500) für eine Kommunikationsvorrichtung, die eine Antenne umfasst, wobei die Antenne eine erste Antenne und eine zweite Antenne umfasst, und wobei der Kommunikationschip (500) Folgendes umfasst:
ein Steuermodul (1001), das dazu konfiguriert ist, einen Dämpfungswert eines Rückschleifsignals der Luftschnittstelle über die Antenne zu erlangen; basierend auf dem Dämpfungswert zu bestimmen, ob die Antenne blockiert ist; und wenn bestimmt wird, dass die Antenne blockiert ist, einen Prozessor (310) zum Ausgeben von Alarminformationen an einen Benutzer anzugeben, die auslösen, dass die Antenne blockiert wird;
wobei der Kommunikationschip ferner ein Sende-Empfängermodul (1002) umfasst;
das Sende-Empfängermodul (1002) dazu konfiguriert ist, basierend auf einer Steuerung des Steuermoduls (1001) ein Messsignal über die erste Antenne zu übertragen, das zu der zweiten Antenne zurückgeschleiften Messsignal zu empfangen und einen Festigkeitswert des zurückgeschleiften Messsignals zu messen; und
das Steuermodul (1001) speziell dazu konfiguriert ist, den Dämpfungswert basierend auf einem Festigkeitswert des Messsignals und dem Festigkeitswert des zurückgeschleiften Messsignals zu bestimmen;
wobei das Sende-Empfängermodul (1002) ein Basisbandmodul (1003) und ein Funkfrequenzmodul (1004) umfasst;
das Basisbandmodul (1003) dazu konfiguriert ist, das Messsignal basierend auf der Steuerung des Steuermoduls (1001) zu generieren;
das Funkfrequenzmodul (1004) dazu konfiguriert ist, das Messsignal über die erste Antenne zu übertragen und das zu der zweiten Antenne zurückgeschleifte Messsignal zu empfangen; und
das Basisbandmodul (1003) ferner dazu konfiguriert ist, den Festigkeitswert des zurückgeschleiften Messsignals zu messen;
wobei das Steuermodul (1001) ein erstes Steuermodul (1101) und ein zweites Steuermodul (1102) umfasst, das Basisbandmodul (1003) ein Bluetooth-Basisbandmodul (1105) und ein Wireless-Fidelity(Wi-Fi) -Basisbandmodul (1107) umfasst, und das Funkfrequenzmodul (1104) ein Bluetooth-Funkfrequenzmodul (1106) und ein Wi-Fi-Funkfrequenzmodul (1108) umfasst;
wenn ein Wi-Fi-Dienst des Kommunikationschips (500) inaktiv ist, das erste Steuermodul (1101) dazu konfiguriert ist, das Bluetooth-Basisbandmodul (1105) zu steuern, um ein monophones Signal oder ein Modulationssignal einer bestimmten Stärke als das Messsignal zu generieren;
das Bluetooth-Basisbandmodul (1105) dazu konfiguriert ist, das Messsignal basierend auf einer Steuerung des ersten Steuermoduls (1101) zu generieren;
das Bluetooth-Funkfrequenzmodul (1106) dazu konfiguriert ist, das Messsignal über die erste Antenne zu übertragen;
das Wi-Fi-Funkfrequenzmodul (1108) dazu konfiguriert ist, das zu der zweiten Antenne zurückgeschleifte Messsignal zu empfangen;
das Wi-Fi-Basisbandmodul (1107) dazu konfiguriert ist, den Festigkeitswert des zurückgeschleiften Messsignals zu messen; und
das zweite Steuermodul (1102) dazu konfiguriert ist, den Dämpfungswert basierend auf dem Festigkeitswert des Messsignals und dem Festigkeitswert des zurückgeschleiften Messsignals zu bestimmen.

8. Kommunikationschip (500) nach Anspruch 7, wobei der Kommunikationschip (500), der dazu konfiguriert ist, einen Dämpfungswert eines Rückschleifsignals der Luftschnittstelle über eine Antenne zu erlangen, Folgendes umfasst:
der Kommunikationschip (500) ist dazu konfiguriert, periodisch eine Vielzahl von Dämpfungswerten basierend auf einer vorgegebenen Periodizität zu erlangen und basierend auf dem Dämpfungswert zu bestimmen, ob die Antenne blockiert ist,
wobei der Kommunikationschip (500), der dazu konfiguriert ist, basierend auf dem Dämpfungswert zu bestimmen, ob die Antenne blockiert ist, Folgendes umfasst:
der Kommunikationschip (500) ist dazu konfiguriert, basierend auf der Vielzahl von erlangten Dämpfungswerten zu bestimmen, ob die Antenne blockiert ist.

9. Kommunikationschip (500) nach Anspruch 7 oder 8, wobei der Kommunikationschip (500), der dazu konfiguriert ist, basierend auf dem Dämpfungswert zu bestimmen, ob die Antenne blockiert ist, Folgendes umfasst:
der Kommunikationschip (500) ist dazu konfiguriert, zu bestimmen, ob eine Differenz zwischen dem Dämpfungswert innerhalb der ersten vorgegebenen Dauer und einem Dämpfungskalibrierungswert größer als ein erster vorgegebener Schwellenwert ist;
falls die Differenz zwischen dem Dämpfungswert innerhalb der ersten vorgegebenen Dauer und dem Dämpfungskalibrierungswert größer als der erste vorgegebene Schwellenwert ist, ist der Kommunikationschip (500) dazu konfiguriert, zu bestimmen, dass die Antenne blockiert ist; und
falls die Differenz zwischen dem Dämpfungswert innerhalb der ersten vorgegebenen Dauer und dem Dämpfungskalibrierungswert nicht größer als der erste vorgegebene Schwellenwert ist, ist der Kommunikationschip (500) dazu konfiguriert, zu bestimmen, dass die Antenne nicht blockiert ist.

10. Kommunikationschip (500) nach Anspruch 8, wobei der Kommunikationschip (500), der dazu konfiguriert ist, basierend auf dem Dämpfungswert zu bestimmen, ob die Antenne blockiert ist, Folgendes umfasst:
wenn eine Differenz zwischen dem Dämpfungswert, der vor der zweiten vorgegebenen Dauer erlangt wird, und einem Dämpfungskalibrierungswert kleiner als ein zweiter vorgegebener Schwellenwert ist, der Kommunikationschip (500) dazu konfiguriert ist, zu bestimmen, ob Differenzen zwischen einer Vielzahl von Dämpfungswerten, die innerhalb der zweiten vorgegebenen Dauer nacheinander erlangt werden, und dem Dämpfungskalibrierungswert alle größer als der zweite vorgegebene Schwellenwert sind;
falls die Differenzen zwischen der Vielzahl von Dämpfungswerten, die innerhalb der zweiten vorgegebenen Dauer nacheinander erlangt werden, und dem Dämpfungskalibrierungswert alle größer als der zweite vorgegebene Schwellenwert sind, der Kommunikationschip (500) dazu konfiguriert ist, zu bestimmen, dass die Antenne blockiert ist; und
falls die Differenzen zwischen der Vielzahl von Dämpfungswerten, die innerhalb der zweiten vorgegebenen Dauer nacheinander erlangt werden, und dem Dämpfungskalibrierungswert nicht alle größer als der zweite vorgegebene Schwellenwert sind, der Kommunikationschip (500) dazu konfiguriert ist, zu bestimmen, dass die Antenne nicht blockiert ist.

11. Kommunikationsvorrichtung, umfassend eine Antenne und einen Chipsatz, wobei die Antenne eine erste Antenne und eine zweite Antenne umfasst, wobei der Chipsatz den Kommunikationschip (500) nach einem der Ansprüche 7 bis 10 und einen Prozessor (310) umfasst, und wobei der Prozessor (310) dazu konfiguriert ist, die Kommunikationsvorrichtung basierend auf einer Angabe des Kommunikationschips (500) zum Ausgeben der Alarminformationen an den Benutzer zu steuern, die auslösen, dass die Antenne blockiert wird.

12. Computerlesbares Speichermedium, auf dem Anweisungen gespeichert sind, die bei Ausführung durch die Kommunikationsvorrichtung nach Anspruch 11 bewirken, dass die Kommunikationsvorrichtung das Verfahren nach einem der Ansprüche 1 bis 6 durchführt.

13. Computerprogrammprodukt, umfassend Anweisungen, welche bei Ausführung durch die Kommunikationsvorrichtung nach Anspruch **11** bewirken, dass die Kommunikationsvorrichtung das Verfahren nach einem der Ansprüche 1 bis 6 durchführt.

## Revendications

1. Procédé d'alarme de blocage d'antenne exécuté par une puce de communication (500) ou un dispositif de communication comprenant la puce de communication (500), le procédé comprenant :
l'obtention (S401) d'une valeur d'atténuation d'un signal de bouclage d'interface radio via une antenne ;
le fait de déterminer (S402), sur la base de la valeur d'atténuation, si l'antenne est bloquée ; et
lors de la détermination que l'antenne est bloquée, l'indication (S403), par la puce de communication (500), à un processeur de délivrer, à un utilisateur, des informations d'alarme signalant que l'antenne est bloquée, ou la délivrance, par le dispositif de communication à l'utilisateur, des informations d'alarme signalant que l'antenne est bloquée ;
dans lequel l'antenne comprend une première antenne et une seconde antenne ; et
l'obtention (S401) d'une valeur d'atténuation d'un signal de bouclage d'interface radio à travers une antenne comprend :
la transmission d'un signal de mesure à travers la première antenne et la réception du signal de mesure renvoyé en boucle vers la seconde antenne ; et
la détermination de la valeur d'atténuation sur la base d'une valeur d'intensité du signal de mesure et d'une valeur d'intensité du signal de mesure renvoyé en boucle ;
dans lequel la puce de communication (500) comprend un module Bluetooth (501) et un module de réseau de fidélité sans fil Wi-Fi (502), et la transmission d'un signal de mesure à travers la première antenne et la réception du signal de mesure renvoyé en boucle vers la seconde antenne comprennent :
lorsqu'un service Wi-Fi de la puce de communication (500) est inactif, la génération, par le module Bluetooth (501), d'un signal monophonique ou d'un signal de modulation d'intensité spécifique comme signal de mesure ;
la transmission, par le module Bluetooth (501), du signal de mesure à travers la première antenne ;
la réception, par le module de réseau Wi-Fi (502), du signal de mesure renvoyé en boucle vers la seconde antenne ; et
la détermination, par le module de réseau Wi-Fi (502), de la valeur d'atténuation sur la base de la valeur d'intensité du signal de mesure et de la valeur d'intensité du signal de mesure renvoyé en boucle.

2. Procédé selon la revendication 1, dans lequel l'obtention (S401) d'une valeur d'atténuation d'un signal de bouclage d'interface radio à travers une antenne comprend :
l'obtention périodique d'une pluralité de valeurs d'atténuation sur la base d'une périodicité prédéfinie ; et
le fait de déterminer (S402), sur la base de la valeur d'atténuation, si l'antenne est bloquée comprend :
le fait de déterminer, sur la base de la pluralité de valeurs d'atténuation obtenues, si l'antenne est bloquée.

3. Procédé selon la revendication 1 ou 2, dans lequel le fait de déterminer (S402), sur la base de la valeur d'atténuation, si l'antenne est bloquée comprend :
le fait de déterminer si une différence entre la valeur d'atténuation dans une première durée prédéfinie et une valeur d'étalonnage d'atténuation est supérieure à un premier seuil prédéfini ;
si la différence entre la valeur d'atténuation dans la première durée prédéfinie et la valeur d'étalonnage d'atténuation est supérieure au premier seuil prédéfini, la détermination que l'antenne est bloquée ; et
si la différence entre la valeur d'atténuation dans la première durée prédéfinie et la valeur d'étalonnage d'atténuation n'est pas supérieure au premier seuil prédéfini, la détermination que l'antenne n'est pas bloquée.

4. Procédé selon la revendication 2, dans lequel le fait de déterminer (S402), sur la base de la valeur d'atténuation, si l'antenne est bloquée comprend :
lorsqu'une différence entre la valeur d'atténuation obtenue avant la seconde durée prédéfinie et une valeur d'étalonnage d'atténuation est inférieure à un second seuil prédéfini, le fait de déterminer si les différences entre une pluralité de valeurs d'atténuation obtenues consécutivement dans la seconde durée prédéfinie et la valeur d'étalonnage d'atténuation sont toutes supérieures au second seuil prédéfini ;
si les différences entre la pluralité de valeurs d'atténuation obtenues consécutivement dans la seconde durée prédéfinie et la valeur d'étalonnage d'atténuation sont toutes supérieures au second seuil prédéfini, la détermination que l'antenne est bloquée ; et
si les différences entre la pluralité de valeurs d'atténuation obtenues consécutivement dans la seconde durée prédéfinie et la valeur d'étalonnage d'atténuation ne sont pas toutes supérieures au second seuil prédéfini, la détermination que l'antenne n'est pas bloquée.

5. Procédé selon l'une quelconque des revendications 1 à 4, dans lequel la délivrance, par le dispositif de communication à l'utilisateur, des informations d'alarme signalant que l'antenne est bloquée comprend :
l'affichage, par le dispositif de communication, d'une interface utilisateur, dans lequel l'interface utilisateur comprend : une icône indiquant que l'antenne est bloquée, et/ou un message contextuel indiquant que l'antenne est bloquée.

6. Procédé selon l'une quelconque des revendications 1 à 4, dans lequel le procédé comprend également :
l'affichage, par le dispositif de communication, d'une première icône, dans lequel la première icône indique l'intensité du signal reçu par le dispositif de communication ; et
la délivrance, par le dispositif de communication à un utilisateur, d'informations d'alarme signalant que l'antenne est bloquée comprend :
la mise à jour et l'affichage, par le dispositif de communication, de la première icône comme seconde icône, dans lequel la seconde icône indique que l'antenne est bloquée.

7. Puce de communication (500) pour un dispositif de communication comprenant une antenne, dans laquelle l'antenne comprend une première antenne et une seconde antenne, et dans laquelle la puce de communication (500) comprend :
un module de commande (1001) configuré pour obtenir une valeur d'atténuation d'un signal de bouclage d'interface radio à travers l'antenne ; déterminer, sur la base de la valeur d'atténuation, si l'antenne est bloquée ; et lorsqu'il est déterminé que l'antenne est bloquée, indiquer à un processeur (310) de délivrer, à un utilisateur, des informations d'alarme signalant que l'antenne est bloquée ;
dans laquelle la puce de communication comprend également un module émetteur-récepteur (1002) ;
le module émetteur-récepteur (1002) est configuré pour transmettre, sur la base de la commande du module de commande (1001), un signal de mesure à travers la première antenne, recevoir le signal de mesure renvoyé en boucle vers la seconde antenne et mesurer une valeur d'intensité du signal de mesure renvoyé en boucle ; et
le module de commande (1001) est spécifiquement configuré pour déterminer la valeur d'atténuation sur la base d'une valeur d'intensité du signal de mesure et de la valeur d'intensité du signal de mesure renvoyé en boucle ;
dans laquelle le module émetteur-récepteur (1002) comprend un module de bande de base (1003) et un module de radiofréquence (1004) ;
le module de bande de base (1003) est configuré pour générer le signal de mesure sur la base de la commande du module de commande (1001) ;
le module de radiofréquence (1004) est configuré pour transmettre le signal de mesure à travers la première antenne et recevoir le signal de mesure renvoyé en boucle vers la seconde antenne ; et
le module de bande de base (1003) est également configuré pour mesurer la valeur d'intensité du signal de mesure renvoyé en boucle ;
dans laquelle le module de commande (1001) comprend un premier module de commande (1101) et un second module de commande (1102), le module de bande de base (1003) comprend un module de bande de base Bluetooth (1105) et un module de bande de base de fidélité sans fil Wi-Fi (1107), et le module de radiofréquence (1104) comprend un module de radiofréquence Bluetooth (1106) et un module de radiofréquence Wi-Fi (1108) ;
lorsqu'un service Wi-Fi de la puce de communication (500) est inactif, le premier module de commande (1101) est configuré pour commander le module de bande de base Bluetooth (1105) pour générer un signal monophonique ou un signal de modulation d'intensité spécifique comme signal de mesure ;
le module de bande de base Bluetooth (1105) est configuré pour générer le signal de mesure sur la base de la commande du premier module de commande (1101) ;
le module de radiofréquence Bluetooth (1106) est configuré pour transmettre le signal de mesure à travers la première antenne ;
le module de radiofréquence Wi-Fi (1108) est configuré pour recevoir le signal de mesure renvoyé en boucle vers la seconde antenne ;
le module de bande de base Wi-Fi (1107) est configuré pour mesurer la valeur d'intensité du signal de mesure renvoyé en boucle ; et
le second module de commande (1102) est configuré pour déterminer la valeur d'atténuation sur la base de la valeur d'intensité du signal de mesure et de la valeur d'intensité du signal de mesure renvoyé en boucle.

8. Puce de communication (500) selon la revendication 7, dans laquelle
la puce de communication (500) configurée pour obtenir une valeur d'atténuation d'un signal de bouclage d'interface radio à travers une antenne comprend que
la puce de communication (500) est configurée pour obtenir périodiquement une pluralité de valeurs d'atténuation sur la base d'une périodicité prédéfinie et pour déterminer, sur la base de la valeur d'atténuation, si l'antenne est bloquée, dans laquelle la puce de communication (500) configurée pour déterminer, sur la base de la valeur d'atténuation, si l'antenne est bloquée comprend que
la puce de communication (500) est configurée pour déterminer, sur la base de la pluralité de valeurs d'atténuation obtenues, si l'antenne est bloquée.

9. Puce de communication (500) selon la revendication 7 ou 8, dans laquelle la puce de communication (500) configurée pour déterminer, sur la base de la valeur d'atténuation, si l'antenne est bloquée comprend que
la puce de communication (500) est configurée pour déterminer si une différence entre la valeur d'atténuation dans une première durée prédéfinie et une valeur d'étalonnage d'atténuation est supérieure à un premier seuil prédéfini ;
si la différence entre la valeur d'atténuation dans la première durée prédéfinie et la valeur d'étalonnage d'atténuation est supérieure au premier seuil prédéfini, la puce de communication (500) est configurée pour déterminer que l'antenne est bloquée ; et
si la différence entre la valeur d'atténuation dans la première durée prédéfinie et la valeur d'étalonnage d'atténuation n'est pas supérieure au premier seuil prédéfini, la puce de communication (500) est configurée pour déterminer que l'antenne n'est pas bloquée.

10. Puce de communication (500) selon la revendication 8, dans laquelle la puce de communication (500) configurée pour déterminer, sur la base de la valeur d'atténuation, si l'antenne est bloquée comprend que
lorsqu'une différence entre la valeur d'atténuation obtenue avant la seconde durée prédéfinie et une valeur d'étalonnage d'atténuation est inférieure à un second seuil prédéfini, la puce de communication (500) est configurée pour déterminer si les différences entre une pluralité de valeurs d'atténuation obtenues consécutivement dans la seconde durée prédéfinie et la valeur d'étalonnage d'atténuation sont toutes supérieures au second seuil prédéfini ;
si les différences entre la pluralité de valeurs d'atténuation obtenues consécutivement dans la seconde durée prédéfinie et la valeur d'étalonnage d'atténuation sont toutes supérieures au second seuil prédéfini, la puce de communication (500) est configurée pour déterminer que l'antenne est bloquée ; et
si les différences entre la pluralité de valeurs d'atténuation obtenues consécutivement dans la seconde durée prédéfinie et la valeur d'étalonnage d'atténuation ne sont pas toutes supérieures au second seuil prédéfini, la puce de communication (500) est configurée pour déterminer que l'antenne n'est pas bloquée.

11. Dispositif de communication comprenant une antenne et un chipset, dans lequel l'antenne comprend une première antenne et une seconde antenne, dans lequel le chipset comprend la puce de communication (500) selon l'une quelconque des revendications 7 à 10 et un processeur (310), et dans lequel le processeur (310) est configuré pour commander, sur la base d'une indication de la puce de communication (500), le dispositif de communication pour délivrer, à l'utilisateur, les informations d'alarme signalant que l'antenne est bloquée.

12. Support de stockage lisible par ordinateur sur lequel sont stockées des instructions qui, lorsqu'elles sont exécutées par le dispositif de communication selon la revendication 11, amènent le dispositif de communication à exécuter le procédé selon l'une quelconque des revendications 1 à 6.

13. Produit de programme informatique comprenant des instructions qui, lorsqu'elles sont exécutées par le dispositif de communication selon la revendication 11, amènent le dispositif de communication à exécuter le procédé selon l'une quelconque des revendications 1 à 6.
